# EUROPEAN PATENT SPECIFICATION

(11) **EP 0 956 894 B1**
(45) Date of publication and mention of the grant of the patent: **27.08.2003**
(21) Application number: 99109428.5
(22) Date of filing: 11.05.1999
(51) Int. Cl.: B01D 53/04

(54) **Adsorption process for recovery of solvents**
Adsorptionsverfahren zur Rückgewinnung von Lösungsmitteln
Procédé d' adsorption pour la récupération de solvants

(30) Priority: 15.05.1998 US 79940
(43) Date of publication of application: 17.11.1999
(73) Proprietor: Dammer S.r.l., 20017 Passirana di RHO (Province of Milan) (IT)
(72) Inventor: Fuderer, Andrija, 2610 Antwerpen (BE)
(74) Representative: Gervasi, Gemma, Dr.

(56) References cited:
- EP-A- 0 641 589
- DE-A- 3 303 423
- DE-A- 3 614 450
- DE-C- 3 743 681
- GB-A- 599 604
- US-A- 5 069 038
- US-A- 5 779 768

## Description

### Field of the invention

The present invention relates to an adsorption process for recovery of solvents.

### Prior art

In the painting and printing industries the paint or ink is dried by evaporating the solvent with hot air. The solvent laden air contains typically 2-12 grams of solvent in a standard cubic meter g/mn³ (g/scm) and 6-24 g/mn³ (g/scm) water vapor. This air is passed through activated carbon. Most of the solvent and some of the water is adsorbed on this carbon and the purified air is vented or reused for paint drying. The adsorption can be carried out with a moving bed or fixed beds of activated carbon.

Horizontal, vertical or radial fixed beds may be utilized as well. The solvent adsorbed on the activated carbon can be desorbed by heating and stripping either with steam or a hot inert gas with a low oxygen content.

A disadvantage of the desorption with steam is that the recovered solvents contains large amounts of water which forms azeotropic mixtures with many solvents.

When the desorption is carried out with hot inert gas, the solvent is recovered by chilling the circulating inert gas. Water is also being desorbed during the heating and stripping with hot gas and the condensate recovered by chilling contains 4-10% by weight of water. If molecular sieves are used to remove the water from the gas before its chilling, a solvent with less than 0.3% by weight water can be recovered. The regeneration of the activated carbon bed is completed by cooling the hot bed with cold gas, preferably below 90°C, to exclude the ignition of solvent or carbon when air is again passed to the bed. The regeneration thus includes a heating and a cooling step. In adsorption processes for solvent recovery with inert gas the regeneration of both the heating and the cooling of the beds is carried out in closed loops. The gas leaving one end of the bed is cooled and/or heated in suitable exchangers to be returned to the other end of the same bed. A blower is provided for the gas circulation.

The disadvantages of this process are the additional cost of the molecular sieves beds, the associated switching valves and other equipment, necessary to regenerate the molecular sieves, and, more important, during the cooling of the bed a substantial amount of solvent from the circulating inert gas leaving one end of the bed cannot be removed by chilling. Typically the gas leaving the chiller at around -10°C still contains 30-100 g/mn³ (g/scm) of solvent. This solvent is re-absorbed on the other end of the bed, thereby significantly reducing the available adsorptive capacity of the bed. Because of the lower adsorptive capacity the time of adsorption must be shortened and consequently the time of regeneration as well.

To complete the regeneration (heating and cooling) in a shorter time, a larger flow rate of inert gas must be applied, which requires more heating, more refrigeration for chilling the gas, a larger blower, and in general more fuel and electric power and more expensive equipment. In the process using fixed beds, several fixed beds are installed and while one or several beds are cyclically in the phase of adsorption one bed is being regenerated. Adsorptive separations using heating for desorption are called thermal swing processes.

A way to reduce the amount of required heat is to begin the cooling step before the entire bed reaches the maximum temperature. The cold gas is taking up heat at the inlet end of the bed and depositing it further ahead, pushing the hot front toward the outlet of the bed. This last method called "thermal pulse" is used with preference in the field of solvent recovery. Its advantage is that, at any time, only one bed is in regeneration. However this method does not efficiently solve the problems of the solvent reloading into the bed and the drying of the gas.

Another way to save heat is the following. When a hot adsorbent bed is cooled, the gas exiting from the bed is warm. It can be further heated and used to heat another bed. In this way the heat contained in one bed in partly recovered to heat another bed. This possibility is sometimes used in the field of drying of natural gas or other gases.

DE 3 303 423 A, US 5 069 038 A, GB 599 604 A, DE 3 743 681 C, DE 3 614 450 A, and EP 0 641 589 show different thermal swing adsorption processes for solvent recovery.

### Summary of the invention

Present invention provides an adsorption process for recovery of solvents, which avoids the disadvantages of the prior art.

In particular, the present invention relates to a thermal swing adsorption process for solvent recovery characterized by applying at least three adsorbers with fixed beds of activated carbon wherein each bed is in overlapping cycles periodically subjected to a sequence of at least the following steps:
a) the solvent containing air is passed to the bed where the solvent is adsorbed;
b) the bed is heated in a first heating step with a hot inert gas coming from another bed which is being cooled;
c) the bed is put on "hold" or "idle", while still another bed completes step g);
d) the bed is further heated in a second heating step by hot inert gas in an essentially closed loop, without entering the other beds;
f) the bed is cooled in a first cooling step during which the gas exiting from the this bed is passed to another bed starting its heating as described in step b);
g) the bed is cooled in a second, final cooling step in an essentially closed loop without entering the other beds.

Optionally a further step e) may be carried out between the second heating step d) and the first cooling step f), such phase consisting in cooling the bed with a not heated gas in a closed loop.

### Description of the figure

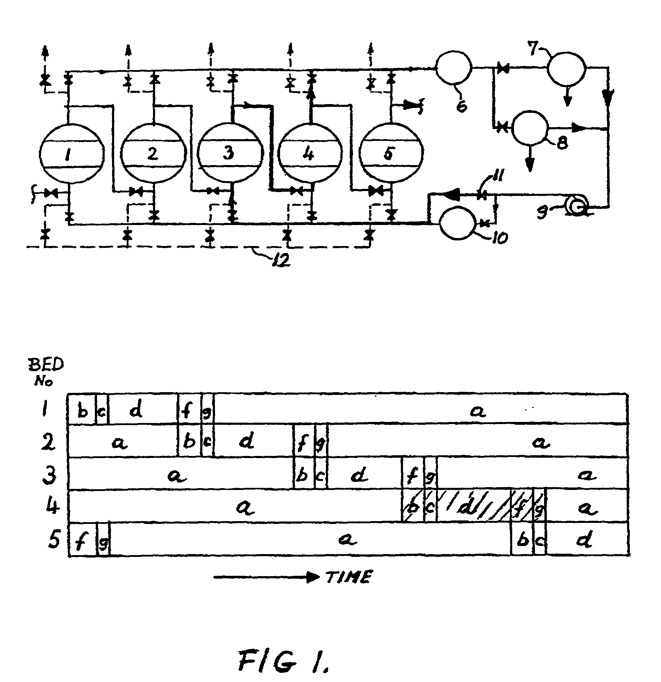

Figure 1 illustrates the flow-sheet and the cycle chart of a process according to the present invention, using five adsorbers with fixed beds of activated carbon.

The adsorbers with fixed beds of activated carbon (1-5) receive the solvent containing air from the main air line (12) through a piping depicted by dotted lines, and the regeneration inert gas from the piping depicted by full lines. The inert gas is shoved by a blower (9) and eventually heated by a gas heater (10). When such a heating is not desired, the inert gas flows directly through the heater by-pass valve (11). After exiting from the bed(s), the inert gas flows through a gas cooler (6) to reach the chiller for solvent recovery (7) and/or the chiller for water removal (8).

The cycle chart exhibits the different phases of the process (a-d, f and g) under which each adsorbers with fixed beds of activated carbon is (numbers in column) during the time.

### Detailed description of the invention

The term "closed loop" for the scope of the present invention means that a gas flows through one bed only without entering into others.

The adsorption process for recovery of solvents according to the present invention is carried out in the following manner.

During the phase a) the solvent containing air releases the solvent and some of the water contained therein into the adsorbers with fixed beds of activated carbon (hereinafter named as the bed). The regeneration of the beds includes heating and then cooling [steps b), d), f) and g)]. However, the heating as well as the cooling is done in two distinct steps [b)+d) and f)+g)]. The first heating of the bed [step b)] is effected with an inert gas (hereinafter named as the gas) coming directly from another bed which is being cooled, i.e. which is in phase f). Then the bed is put in "idle" until the upstream bed completes the second cooling step, i.e. the g) step. At this point the bed is further heated [step d)] with a gas flowing directly from gas heater (10) and then going directly to gas cooler (6) and chiller for solvent recovery (7) and/or for water removal (8). The first cooling step f) is effected with a gas flowing from blower (9) through the heater by-pass valve (11).

The temperature of the incoming gas of this phase is apparently lower than the one of the bed thus resulting into a cooling of the bed and a heating of the gas which is then passed to a downstream bed for starting its first heating step [step b)]. In the second cooling phase the gas comes again from the heater by-pass valve (11) and then flow to the gas cooler (6) and chiller for solvent recovery (7) and/or for water removal (8).

Beneficially a further step e) may be carried out between the second heating step d) and the first cooling step f). The gas used for this step comes directly from blower (9) and heater by-pass valve (11) and leave the pre-cooled bed to go directly to the gas cooler (6) without entering in the downstream bed.

Computer simulations and measurements of the solvent and water content of the gas exiting from the heated bed have shown that initially very little of solvent but much of water is present in the gas till the exit temperature reaches some 65-85°C. At this point the solvent concentration increases very rapidly while the water concentration rapidly drops, since about 95% of the water, but less than 1% of solvent, contained originally in the bed is already desorbed.

During the step a) the solvent and the water contained in the air stream flowing in the pipelines (12) are adsorbed by the bed(s). The water is the first to be desorbed as its affinity for the activated carbon of the beds is lower than the one of the solvent. As the downstream cool bed is not capable to adsorb all the water which is being desorbed from the heated bed, a portion of water has to be removed with other means, for example by chilling the gas. During the first cooling step f), the gas is entering into the bed to be cooled typically at a temperature between -20° and 30°C and contains between 1 and 5 g/mn³ (g/scm) solvent and only 2-10 g/mn³ (g/scm) water. The bed is hot and does not contain almost any water, since all water was desorbed during the heating periods. As the bed is cooled, the gas at the outlet of the bed is, for example, at 140°C and contains much more of solvent, typically between 20 and 120 g/mn³ (g/scm). The cooling of this bed is very efficient because, in addition to the effect of the cold gas, there is a strong cooling effect due to large amounts of solvent desorbed. The gas effluent from the cooled bed is now hot and is passed to the downstream bed starting its heating step. In this bed the heating is very efficient because in addition to the fairly high inlet temperature, there is the effect of adsorption of a substantial amount of solvent. Helped by the very low water concentration in the inlet gas and the effect of heating, the water is being desorbed from this heated bed more rapidly and completely.

Molecular sieves may be used to remove the water from the gas. However it was found, that specifically in this cycle it is sufficient to remove the water by chilling.

With respect to the prior art processes wherein one chiller cooled with brine or evaporating refrigerant is used, the present invention provides two chillers, (7) and (8). In the first period of time the gas is directed to the chiller serving for water condensation or freezing (7), and when most of the water is removed from the bed and the gas rich in solvent arrives, this is directed by suitable valves to the other chiller for solvent condensation and recovery. The periodical switching from one chiller to the other is less costly then the drying system using molecular sieve beds and it requires much less energy.

The gist of the present invention resides in putting for a period two carbon beds simultaneously in the inert gas regeneration cycle made by steps b), c), d), f) and g), such that one bed is cooled, and the other bed is heated, and this provides multiple advantages in the solvent recovery process:
the heat of the gas exiting from the hot bed may be re-used;
due to the water removal from one bed and water adsorption in the other bed the water in excess can be eliminated by simple chilling instead of expensive and energy consuming drying by molecular sieves and their regeneration;
the bed is cooled with a gas containing very little of solvent, very little of solvent is reloaded to the cooled bed and the free adsorbing capacity of the carbon remains high thus yielding longer cycles and a further reduction of inert gas flow-rate and hence in further reduction of energy requirement; and
due to the transport of solvent from the cooled to the heated bed, both the cooling and the heating are more rapid and efficient.

Another surprising feature of the invention resides in the presence of the step c).

When during the first heating of a bed the front of the solvent breaks through having a high concentration of solvents, it is advantageous to discontinue the heating of the bed and leave it in a "hold" position, i.e. inactive, while the cooling of the upstream bed is completed in closed loop. The significant advantage is that the concentration of solvent in the gas exiting from the partially cooled bed is already very low, typically between 0.1 and 10 g/mn³ (g/scm), so that the entire cooling step is done with a gas containing only little of solvent. The consequence is a carbon bed regenerated extremely well, with an exceptionally high adsorbing capacity. This in turn means that the cycle time of both adsorption and regeneration can be longer. The final result is that the overall gas needed to desorb 1kg of solvent is reduced by 30-35%. Compared to conventional processes this means a significant saving of equipment size and energy. Including the advantage of the possible elimination of the molecular sieves and the heat needed for their regeneration, the specific heat requirements expressed in kWh or Joules/g of solvent is reduced by around 55%.

The "closed loop" of inert gas is not rigorously closed: some solvent or water may be removed from the loop by chilling, some nitrogen or inert gas may be added during the cooling period or removed from the loop during heating to maintain the same pressure. However, these quantities are small when compared to the flow of circulating inert gas, thus the loop can be considered as essentially closed.

In a preferred embodiment of the invention the gas cooler (6) is preferably cooled with cooling water, chillers (7) and (8) with brine or evaporating refrigerant, and heater (10) is heated with circulating hot oil.

As for the number of beds possibly employed in the present process, it will be clear to those skilled in the art that this process offers more advantages with larger plants with a larger number of beds. In fact in a small plant with a total of 3 beds the economics are only slightly better than the economics of a conventional cycle, as the savings of a smaller regeneration system are counteracted by the increased cost of larger adsorbers and the higher total weight of activated carbon, so that only the energy savings tip the balance in favor of the new process.

The surface of the beds is sized in such a way that the superficial air velocity across the bed is about 55% of the time slightly lower and about 45% of the time slightly higher than in a conventional cycle, which has always the same number of beds on adsorption. Typical superficial velocity of the air passing the bed will be between 0.12 and 0.30 ml/sec. The activated carbon may be granular or pelletized, the most frequently applied pellet diameter will be 3-5 mm. Typical thickness of the carbon bed will be between 500 and 1,000 mm.

In the conventional process 25-32% of the activated carbon is highly pre-loaded with solvent during the cooling step so that the actually available carbon layer for adsorption is substantially reduced. Because of the much better regeneration of the activated carbon with the new process, the same adsorption efficiency can be obtained with a 15-25% shallower bed which means lower pressure drops and lower cost of active carbon.

The adsorption process for recovery of solvents of the present invention will be now illustrated by the following examples.

### EXAMPLE 1

There are 5 beds (NB=5). The duration of the single steps b) to g) in minutes is as follows: b)=30, c)=15, d)=60, e)=0, f)=30 and g)=15. It will be noted that b)=f) and c)=g), because steps b) and c) of one bed overlap with steps f) and g) of another bed. The sum of these steps is the regeneration time REG=b+c+d+e+f+g.

The sum of steps b+c+d+e (SUB) represents a subcycle, which is the part of cycle of one bed not overlapping with the cycle of another. The duration of a complete cycle is CYCLE = NB·SUB.

In this example REG=150, SUB=105, CYCLE=525 minutes and the duration of the adsorption step is a)=525-150= 375 minutes. In the average time there are 3.57 beds simultaneously on adsorption but actually there are either 3 or 4 beds on adsorption.

With reference to the flow-sheet and cycle chart of Fig. I, the steps of regeneration of, for example, bed 4 are summarized in the following table:

| Step of bed 4 | Gas route |
|---|---|
| b) first heating | Blower 9 - Bypass 11 - Bed 3 - Bed 4 - Cooler 6 - Chiller 8 |
| c) idle = "hold" | Blower 9 - Bypass 11 - Bed 3 - Cooler 6 - Chiller 8 |
| d) 2nd heating | Blower 9 - Heater 10 - Bed 4 - Cooler 6 - Chiller 7 |
| f) first cooling | Blower 9 - Bypass 11 - Bed 4 - bed 5 - Cooler 6 - Chiller 8 |
| 9) 2nd cooling | Blower 9 - Bypass 11 - Bed 4 - Cooler 6 - Chiller 8 |

After step g) the regeneration of bed 4 is completed and it may be put again on adsorption step a) to receive feed air. It will be understood that during the steps b), c) and f) of bed 4 above, the cooling of bed 3 is completed and the heating of bed 5 starts. Ice may collect on the fins of the chiller in step b) and melted again and drained off if the refrigerant flow to the chiller is stopped during step c). The water thus recovered may contain 1% of solvent. This solvent may be easily stripped with fresh air. The stripper overhead is then added to the mainstream of air. Alternatively the water with 1% of solvent may be injected into the mainstream of air, which has around 1,000 times larger mass flow.

### EXAMPLE 2

There are 7 beds (NB=7). The steps are b)=22, c)=12, d)=48, e)=4, f)=22, g)=12 minutes. Thus REG=120, SUB=86, CYCLE=602, a)=482 minutes. In time average there are 5.6 beds on adsorption and 1.4 beds on regeneration.

## Claims

1. A thermal swing adsorption process for solvent recovery, wherein at least three adsorbers with fixed beds of activated carbon are applied and each of the beds is periodically subjected, in overlapping cycles, to a sequence of at least the following steps:
a) the solvent containing air is passed to the bed where the solvent is adsorbed;
b) the bed is heated in a first heating step with a hot inert gas coming from another bed which is being cooled;
c) the bed is put on "hold" or "idle", while still another bed completes step g);
d) the bed is further heated in a second heating step by hot inert gas in an essentially closed loop, without entering the other beds;
f) the bed is cooled in a first cooling step during which the gas exiting from the this bed is passed to another bed starting its heating as described in step b);
g) the bed is cooled in a second, final cooling step in an essentially closed loop without entering the other beds.

2. A process as defined in claim 1 **characterized in that** between the steps d) and f) another cooling step e) is effected in which for a short time the cooling of the bed is started in the same closed loop as under step d) but with a heater inactive.

3. A process as defined in claim 1 **characterized in that** between the steps d) and f) another cooling step e) is effected in which for a short time the cooling of the bed, is started in the same closed loop as under step d) but with a heater bypassed.

4. A process as defined in claim 1 **characterized in that** the gas leaving the heated bed during step b) is cooled and passed to a first chiller for a partial removal of water from the gas.

5. A process as defined in claim 1 **characterized in that** the gas leaving the bed during step d) is cooled and passed to a second chiller for a partial removal of the solvent from the gas.

6. A process as defined in claim 1 **characterized in that** a duration of the steps b)-g) in percents over the total regeneration time at least is selected as follows: b) 14%, c) 6%, d) 35%, f) 14% and g) 6%.

## Patentansprüche

1. Thermozyklisches Adsorptionsverfahren für die Rückgewinnung von Lösungsmitteln, bei welchem mindestens drei Adsorber mit Feststoffbetten aus Aktivkohle eingesetzt werden und jedes dieser Festbetten in sich überlappenden Zyklen einer Aufeinanderfolge von zumindest den folgenden Schritten unterzogen wird:
a) die das Lösungsmittel enthaltende Luft wird dem Bett zugeführt, wo das Lösungsmittel adsorbiert wird;
b) das Bett wird in einem ersten Aufheizschritt mit einem heißen Inertgas aufgeheizt, welches von einem anderen Bett kommt, das gerade abgekühlt wird;
c) das Bett-wird auf "Halt" oder "Leerlauf" gestellt, während bei einem weiteren Bett der Schritt g) zum Abschluss gebracht wird;
d) das Bett wird in einem zweiten Aufheizschritt durch heißes Inertgas in einem geschlossenen Umlauf weiter erhitzt, ohne dass dieses in die anderen Betten gelangt
f) das Bett wird in einem ersten Abkühlschritt abgekühlt, und während dieses Schrittes wird das aus diesem Bett austretende Gas zu einem anderen Bett geleitet, wo es dessen Aufheizen, wie im Schritt b) beschrieben, in die Wege leitet
g) das Bett wird in einem zweiten, abschließenden Kühlschritt in einem im Wesentlichen geschlossenen Umlauf abgekühlt, ohne dass dieses in die anderen Betten gelangt.

2. Verfahren nach Anspruch 1, **dadurch gekennzeichnet, dass** zwischen den Schritten d) und f) ein weiterer Kühlschritt e) zur Wirkung kommt, in welchem für eine kurze Zeit die Kühlung des Betts in dem gleichen geschlossenen Umlauf wie im Schritt d) gestartet wird, jedoch mit einem inaktiven Heizgerät.

3. Verfahren nach Anspruch 1, **dadurch gekennzeichnet, dass** zwischen den Schritten d) und f) ein weiterer Kühlschritt e) zur Wirkung kommt, in welchem für eine kurze Zeit die Kühlung des Betts in dem gleichen geschlossenen Umlauf wie im Schritt d) gestartet wird, jedoch mit dem Heizgerät im Bypass-Betrieb.

4. Verfahren nach Anspruch 1, **dadurch gekennzeichnet, dass** das Gas, welches das während des Schrittes b) erhitzte Bett verlässt, abgekühlt wird und zu einem ersten Kühlapparat geleitet wird, um das Wasser teilweise aus dem Gas zu entfernen.

5. Verfahren nach Anspruch 1, **dadurch gekennzeichnet, dass** das Gas, welches das Bett während des Schrittes d) verlässt, abgekühlt wird und zu einem zweiten Kühlapparat geleitet wird, um das Lösungsmittel teilweise aus dem Gas zu entfernen.

6. Verfahren nach Anspruch 1, **dadurch gekennzeichnet, dass** die Zeitdauer des Ablaufes der Schritte b) - g) in Prozent über die gesamte Regenerationszeit zumindest wie folgt ausgewählt wird: b) 14 %, c) 6 %, d) 35 %, f) 14 % und g) 6 %.

## Revendications

1. Procédé d'adsorption à oscillation thermique pour la récupération de solvant, dans lequel au moins trois adsorbeurs à lit fixe de charbon activé sont appliqués et chacun des lits est périodiquement soumis, dans des cycles se chevauchant, à une séquence d'au moins les étapes suivantes :
a) l'air contenant le solvant est passé dans le lit où le solvant est adsorbé ;
b) le lit est chauffé dans une première étape de chauffage avec un gaz inerte chaud venant d'un autre lit qui est refroidi ;
c) le lit est placé sur "maintien" ou "repos", tandis qu'encore un autre lit achève l'étape g) ;
d) le lit est, à nouveau, chauffé dans une seconde étape de chauffage par un gaz inerte chaud dans une boucle fermée sans entrer dans les autres lits ;
f) le lit est refroidi dans une première étape de refroidissement pendant laquelle le gaz sortant de ce lit est passé dans un autre lit commençant son chauffage comme décrit dans l'étape b) ;
g) le lit est refroidi dans une seconde, ultime étape de refroidissement dans une boucle essentiellement fermée sans entrer dans les autres lits.

2. Procédé selon la revendication 1, **caractérisé en ce que** entre les étapes d) et f) une autre étape de refroidissement e) est effectuée dans laquelle, pendant un temps court, le refroidissement du lit est démarré dans la même boucle fermée que sous l'étape d) , mais avec un dispositif de chauffage inactif.

3. Procédé selon la revendication 1, **caractérisé en ce que** entre les étapes d) et f) une autre étape de refroidissement e) est effectuée dans laquelle pendant un temps court le refroidissement du lit est démarré dans la même boucle fermée que sous l'étape d), mais avec un dispositif de chauffage contourné.

4. Procédé selon la revendication 1, **caractérisé en ce que** le gaz quittant le lit chauffé pendant l'étape b) est refroidi et passé dans un premier condenseur pour un enlèvement partiel de l'eau du gaz.

5. Procédé selon la revendication 1, **caractérisé en ce que** le gaz quittant le lit pendant l'étape d) est refroidi et passé dans un second condenseur pour enlèvement partiel du solvant du gaz.

6. Procédé selon la revendication 1, **caractérisé en ce qu'**une durée des étapes b) à g) en pourcentage sur le temps de régénération total est au moins choisie comme suit : b) 14 %, c) 6 %, d) 35 %, f) 14 % et g) 6 %.
